(19) Europäisches Patentamt / European Patent Office / Office européen des brevets

(11) **EP 4 742 317 A1**

(12) **EUROPEAN PATENT APPLICATION**
published in accordance with Art. 153(4) EPC

(43) Date of publication:
**13.05.2026 Bulletin 2026/20**

(21) Application number: **23944179.3**

(22) Date of filing: **30.10.2023**

(51) International Patent Classification (IPC):
**H01M 4/36** $^{(2006.01)}$

(52) Cooperative Patent Classification (CPC):
Y02E 60/10

(86) International application number:
**PCT/CN2023/127831**

(87) International publication number:
**WO 2025/007458 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.07.2023 CN 202310824530**

(71) Applicant: **Contemporary Amperex Technology Co., Limited**
**Ningde, Fujian 352100 (CN)**

(72) Inventors:
• **WU, Kai**
**Ningde, Fujian 352100 (CN)**
• **LIANG, Zibin**
**Ningde, Fujian 352100 (CN)**
• **WANG, Yuhao**
**Ningde, Fujian 352100 (CN)**
• **LIN, Wenguang**
**Ningde, Fujian 352100 (CN)**
• **LI, Qiang**
**Ningde, Fujian 352100 (CN)**
• **ZHANG, Xinxin**
**Ningde, Fujian 352100 (CN)**

(74) Representative: **Kraus & Lederer PartGmbB**
**Thomas-Wimmer-Ring 15**
**80539 München (DE)**

(54) **POSITIVE ELECTRODE ACTIVE MATERIAL AND PREPARATION METHOD THEREFOR, POSITIVE ELECTRODE SHEET, BATTERY, AND ELECTRICAL DEVICE**

(57)    The present application discloses a positive electrode active material and a preparation method thereof, a positive electrode plate, a battery, and an electric apparatus, where the positive electrode active material includes a sodium manganese oxide, the sodium manganese oxide includes a first phase and a second phase, the first phase includes alternating first sodium ion layers and first transition metal layers, and the second phase includes alternating second sodium ion layers and second transition metal layers. In the first phase, an interlayer spacing between adjacent first transition metal layers in a direction perpendicular to a (001) crystal plane is $d_1$, in the second phase, an interlayer spacing between adjacent second transition metal layers in the direction perpendicular to the (001) crystal plane is $d_2$, and $d_1$-$d_2$ ranges from 0.01 nm to 0.02 nm.

Interlayer spacing

Transition metal layer

Sodium ion layer

Transition metal layer

FIG. 1

**Description**

**TECHNICAL** FIELD

The present disclosure relates to the field of batteries, and specifically, to a positive electrode active material and a preparation method thereof, a positive electrode plate, a battery, and an electric apparatus.

BACKGROUND

Sodium-ion batteries are secondary batteries that primarily rely on the movement of sodium ions between positive and negative electrodes to function. Secondary batteries, represented by sodium-ion batteries, have been applied in various fields, such as energy storage power systems (for example, hydroelectric, thermal, wind, and solar power stations), electric vehicles, and aerospace. Compared to lithium-ion batteries, sodium salts, which are the main components of positive electrode active materials for sodium-ion batteries, are more abundant in reserves and significantly less expensive than lithium salts, which are the main components of positive electrode active materials for lithium-ion batteries, thereby providing sodium-ion batteries with a significant cost advantage in raw materials. However, sodium-ion batteries still face issues such as low energy density and poor stability, which limit their practical applications.

SUMMARY

According to a first aspect of the present application, a positive electrode active material is provided, where the positive electrode active material includes a sodium manganese oxide, the sodium manganese oxide includes a first phase and a second phase, the first phase includes alternating first sodium ion layers and first transition metal layers, and the second phase includes alternating second sodium ion layers and second transition metal layers; and in the first phase, an interlayer spacing between adjacent first transition metal layers in a direction perpendicular to a (001) crystal plane is $d_1$, in the second phase, an interlayer spacing between adjacent second transition metal layers in the direction perpendicular to the (001) crystal plane is $d_2$, and $d_1$-$d_2$ ranges from 0.01 nm to 0.02 nm. This configuration enables the first phase and the second phase to experience reduced strain during sodium insertion and extraction, thereby reducing defects and cracks in the crystal structure and enhancing the cycling stability of the positive electrode active material.

According to an embodiment of the present application, the sodium manganese oxide includes a doping element Q, where the doping element satisfies at least one of the following conditions: the doping element Q includes a first doping element Q1, where the first doping element partially substitutes sodium in the sodium manganese oxide, and the first doping element includes at least one of Li, K, Ca, La, and Sr; and the doping element Q includes a second doping element Q2, where the second doping element partially substitutes manganese in the sodium manganese oxide, and the second doping element includes at least one of Fe, Co, Ni, Cu, Zn, Ga, Li, B, Mg, Al, Si, Ti, Y, Zr, Nb, Mo, In, Sn, Sb, La, Ce, Ta, W, and Bi; and the doping element Q includes a third doping element Q3, where the third doping element partially substitutes oxygen in the sodium manganese oxide, and the third doping element includes at least one of F and Cl. This configuration can further enhance the structural stability and specific capacity of the positive electrode active material.

According to an embodiment of the present application, the sodium manganese oxide satisfies a chemical formula: $Na_xQ1_aMn_yQ2_bO_zQ3_c$, where $0.5 < x \leq 1.2$, $0 \leq a \leq 0.5$, and $0.5 < x+a \leq 1.2$; $0 < y$, $0 \leq b \leq 0.6$, and $y+b=1$; and $1.8 \leq z \leq 2.2$, $0 \leq c \leq 0.2$, and $1.8 \leq z+c \leq 2.2$. This configuration can enhance the structural stability of the positive electrode active material during cycling.

According to an embodiment of the present application, the sodium manganese oxide satisfies a chemical formula: $Na_xQ1_aMn_yFe_dNi_eQ2_bO_zQ3_c$, where $y+d+e+b=1$, $0.1 \leq d \leq 0.6$, and $0.1 \leq e \leq 0.6$; and in the first phase, a diffraction peak intensity of the first transition metal layer/the first sodium ion layer for X-rays within $2\theta$ ranges from 13° to 16.2° is $S_1$, and in the second phase, a diffraction peak intensity of the second transition metal layer/the second sodium ion layer for X-rays within $2\theta$ ranges from 16.2° to 17° is $S_2$, where $S_1/(S_2+S_1) \times e \leq 0.1$. This configuration can enhance the specific capacity, average discharge voltage, and structural stability of the positive electrode active material during cycling.

According to an embodiment of the present application, $0.05 \leq S_1/(S_2+S_1)$, optionally, $0.1 \leq S_1/(S_2+S_1)$. This configuration can further enhance the structural stability and specific capacity of the positive electrode active material.

According to an embodiment of the present application, the first phase of the sodium manganese oxide satisfies a chemical formula: $Na_{x1}Q1_{a1}Mn_{y1}Fe_{d1}Ni_{e1}Q2_{b1}O_zQ3_{c1}$, where $0.6 < x1 \leq 0.8$, $0 \leq a1 \leq 0.6$, $0 \leq b1 \leq 0.6$, $y1+d1+e1+c1=1$, and $0 \leq (d1 \times e1)/(y1^2) \leq 0.5$; and the second phase of the sodium manganese oxide satisfies a chemical formula: $Na_{x2}Q1_{a2}Mn_{y2}Fe_{d2}Ni_{e2}Q2_{b2}O_zQ3_{c2}$, where $0.7 < x2 \leq 1$, $0.1 \leq a2 \leq 0.6$, $0.1 \leq b2 \leq 0.6$, $y2+d2+e2+c2=1$, and $0.1 \leq (d2 \times e2)/(y2^2) \leq 1$. This configuration can further enhance the structural stability and specific capacity of the positive electrode active material.

According to an embodiment of the present application, in the first phase, the diffraction peak intensity of the first transition metal layer/the first sodium ion layer for X-rays within 20 ranges from 13° to 16.2° is $S_1$, in the second phase, the diffraction peak intensity of the second transition metal layer/the second sodium ion layer for X-rays within 20 ranges from 16.2° to 17° is $S_2$, and $S_1$ and $S_2$ satisfy $0.01 \leq S_1/(S_1+S_2) \leq 0.5$. This configuration enables the positive electrode active material to have both high cycling stability and high specific capacity. Optionally, $0.05 \leq S_1/(S_1+S_2) \leq 0.5$. This configuration can further enhance the structural stability and specific capacity of the positive electrode active material.

According to an embodiment of the present application, 0.550 nm$\leq d_1 \leq$0.565 nm, and 0.530 nm$\leq d_2 \leq$0.545 nm. This configuration can leverage the synergistic effect of the first phase and the second phase during cycling to enhance the structural stability of the positive electrode active material.

According to an embodiment of the present application, the first phase is a P2 phase with a space group of P63/mmc; and the second phase is an O3 phase with a space group of R3m. This configuration utilizes the synergistic effect between the P2 phase and the O3 phase to further enhance the cycling stability and specific capacity of the positive electrode active material.

According to an embodiment of the present application, at 25°C, a pH of a deionized water solution of the positive electrode active material with a mass concentration of 2 g/18 mL is 7-13; optionally, the pH is 11-13. This configuration facilitates the formation of a uniformly dispersed positive electrode slurry that is easy to apply.

According to a second aspect of the present application, a method for preparing the foregoing positive electrode active material is provided, where the method includes: providing a precursor; performing a calcination treatment on the precursor to obtain the positive electrode active material, where the positive electrode active material includes a sodium manganese oxide; and the sodium manganese oxide includes a first phase and a second phase, the first phase includes alternating first sodium ion layers and first transition metal layers, the second phase includes alternating second sodium ion layers and second transition metal layers; and in the first phase, an interlayer spacing between adjacent first transition metal layers in a direction perpendicular to a (001) crystal plane is $d_1$, in the second phase, an interlayer spacing between adjacent second transition metal layers in the direction perpendicular to the (001) crystal plane is $d_2$, and $d_1$-$d_2$ ranges from 0.01 nm to 0.02 nm. This method enables the preparation of the foregoing positive electrode active material using a relatively simple process.

According to an embodiment of the present application, the providing a precursor includes: providing a mixture of a first sodium manganese oxide and a second sodium manganese oxide, where a molar amount of the first sodium manganese oxide in the mixture is $m_1$, a molar amount of the second sodium manganese oxide in the mixture is $m_2$, and $m_1$:$m_2$ ranges from (1:2) to (1:10), where an interlayer spacing between adjacent first transition metal layers in the first sodium manganese oxide in the direction perpendicular to the (001) crystal plane is 0.550 nm-0.565 nm, and an interlayer spacing between adjacent second transition metal layers in the second sodium manganese oxide in the direction perpendicular to the (001) crystal plane is 0.530 nm-0.545 nm. This configuration enables the preparation of the foregoing positive electrode active material through a two-step calcination process, precisely controlling the interlayer spacing $d_1$ between adjacent first transition metal layers in the first phase in the direction perpendicular to the (001) crystal plane and the interlayer spacing $d_2$ between adjacent second transition metal layers in the second phase in the direction perpendicular to the (001) crystal plane.

According to an embodiment of the present application, the calcination treatment satisfies at least one of the following conditions: a temperature of the calcination treatment is 800°C-900°C; and a duration of the calcination treatment is 0.5 h-20 h. This configuration enables the preparation of a positive electrode active material with the desired interlayer spacing.

According to an embodiment of the present application, providing the first sodium manganese oxide includes: providing a mixture of a sodium source, a manganese oxide, and a doping element oxide, and performing a first calcination treatment, where a molar amount of the sodium source in the mixture is $m_{1-1}$, a molar amount of the manganese oxide in the mixture is $m_{2-1}$, a molar amount of the doping element oxide in the mixture is $m_{3-1}$, and $m_{1-1}$:$m_{2-1}$:$m_{3-1}$= (0.5-0.8):(0.6-0.95):(0-0.4). This configuration enables the preparation of the first sodium manganese oxide with the desired interlayer spacing.

According to an embodiment of the present application, the first calcination treatment satisfies at least one of the following conditions: a temperature of the first calcination treatment is 700°C-900°C; and a duration of the first calcination treatment is 10 h-20 h.

According to an embodiment of the present application, providing the second sodium manganese oxide includes: providing a mixture of a sodium source, a manganese oxide, and a doping element oxide, and performing a second calcination treatment, where a molar amount of the sodium source in the mixture is $m_{1-2}$, a molar amount of the manganese oxide in the mixture is $m_{2-2}$, a molar amount of the doping element oxide in the mixture is $m_{3-2}$, and $m_{1-2}$:$m_{2-2}$:$m_{3-2}$= (0.8-1.1):(0.3-0.5):(0-0.6). This configuration enables the preparation of the second sodium manganese oxide with the desired interlayer spacing.

According to an embodiment of the present application, the second calcination treatment satisfies at least one of the following conditions: a temperature of the second calcination treatment is 800°C-1100°C; and a duration of the second calcination treatment is 10 h-20 h.

According to a third aspect of the present application, a positive electrode plate is provided, where the positive electrode plate includes the foregoing positive electrode active material, and/or a positive electrode active material prepared using the foregoing method. This positive electrode plate possesses all the features and advantages of the foregoing positive electrode active material and the method for preparing the positive electrode active material, which are not repeated herein.

According to a fourth aspect of the present application, a battery is provided, where the battery includes the foregoing positive electrode plate. This battery possesses all the features and advantages of the foregoing positive electrode plate, which are not repeated herein.

According to a fifth aspect of the present application, an electric apparatus is provided, where the electric apparatus includes the foregoing battery. This electric apparatus possesses all the features and advantages of the foregoing battery, which are not repeated herein.

BRIEF DESCRIPTION OF DRAWINGS

The above and/or additional aspects and advantages of the present application will become apparent and readily understood from the description of embodiments in conjunction with the following drawings. The drawings are used solely for illustrating embodiments and are not considered to limit the present application, where

FIG. 1 is a schematic diagram of an interlayer spacing of a sodium manganese oxide;
FIG. 2 is a schematic diagram of a battery according to an embodiment of the present application;
FIG. 3 is an exploded view of the battery according to the embodiment of the present application shown in FIG. 2;
FIG. 4 is a schematic diagram of a battery module according to an embodiment of the present application;
FIG. 5 is a schematic diagram of a battery pack according to an embodiment of the present application;
FIG. 6 is an exploded view of the battery pack according to the embodiment of the present application shown in FIG. 5;
FIG. 7 is a schematic diagram of an electric apparatus using a battery as a power source according to an embodiment of the present application;
FIG. 8 is an XRD diffraction pattern of the positive electrode active material in Example 1 of the present application; and
FIG. 9 is an XRD diffraction pattern of the positive electrode active material in Comparative Example 1 of the present application.

Description of Reference Signs:

1: battery pack, 2: upper case, 3: lower case, 4: battery module, 5: battery,
51: housing, 52: electrode assembly, and 53: top cover assembly.

**DESCRIPTION OF EMBODIMENTS**

Embodiments of the present application are described in detail below, with examples of the embodiments illustrated in the drawings, where the same or similar reference numerals denote the same or similar elements or elements having the same or similar functions throughout. The embodiments described below with reference to the drawings are exemplary and are intended only to explain the present application, not to be construed as limiting the present application.

In the description of the present application, "A and/or B " may include any of the cases of A alone, B alone, or both A and B, where A and B are used merely for illustration and may represent any technical features connected by "and/or " in the present application.

In the description of the present application, the term "plurality " means two or more.

In the description of the present application, whether or not terms such as "about " or "approximately " are used, all numbers disclosed herein are approximate. The value of each number may vary by less than 10% or by a reasonable difference as considered by those skilled in the art, such as 1%, 2%, 3%, 4%, or 5%.

Unless otherwise defined, all technical and scientific terms used in the present application have the same meanings as commonly understood by those skilled in the technical field of the present application; the terms used in the present application are for the purpose of describing specific embodiments only and are not intended to limit the present application; unless otherwise specified, the terms used in the present application have the commonly understood meanings in the art. Unless otherwise specified, the values of parameters mentioned in the present application can be measured using various measurement methods commonly used in the art (for example, they can be tested according to the methods provided in the embodiments of the present application).

The terms "include " and "have " and any variations thereof in the specification and claims of the present application are open-ended expressions, meaning they include the specified content of the present application but do not exclude other content.

With the continuous expansion of applications for power batteries, the market demand for power batteries is also growing. Secondary batteries, represented by sodium-ion batteries, have been applied in various fields, such as energy storage power systems, electric vehicles, and aerospace. Current sodium-ion batteries suffer from significant declines in cycling performance with increasing charge-discharge cycles and capacity reduction due to deactivation of the positive electrode active material.

Taking a positive electrode active material containing sodium manganese oxide as an example, the layered structure of sodium manganese oxide undergoes continuous sodium ion insertion and extraction during charge-discharge cycles. Correspondingly, during sodium ion insertion and extraction, the layered structure of sodium manganese oxide contracts and expands to accommodate the sodium ions. When the layered structure of sodium manganese oxide is subjected to excessive stress during contraction and expansion, the layered structure may be damaged by the excessive stress, leading to defects and cracks within the sodium manganese oxide particles, resulting in poor cycling stability of the positive electrode active material.

Based on the above considerations, the present application proposes a sodium manganese oxide positive electrode active material with mixed phases. In a first phase of the positive electrode active material, an interlayer spacing between adjacent first transition metal layers in a direction perpendicular to a (001) crystal plane is $d_1$, and in a second phase, an interlayer spacing between adjacent second transition metal layers in the direction perpendicular to the (001) crystal plane is $d_2$, with the difference between $d_1$ and $d_2$ ranging from 0.01 nm to 0.02 nm. This configuration enables a "locking " effect during the contraction and expansion of the layered structure of sodium manganese oxide, reducing the stress experienced by the layered structure during sodium insertion and extraction, thereby reducing strain in the crystal structure, minimizing defects and cracks due to excessive strain, and enhancing the stability of the positive electrode active material during charge-discharge cycles.

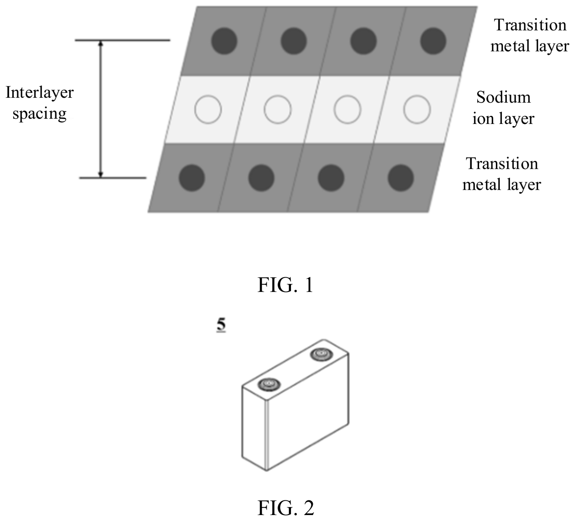

As an example, referring to FIG. 1, the aforementioned interlayer spacing refers to the distance between two adjacent transition metal layers in the direction perpendicular to the (001) crystal plane in the sodium manganese layered oxide.

Typically, a battery includes a positive electrode plate, a negative electrode plate, an electrolyte, and a separator. During battery charging and discharging, active ions, such as active sodium ions, intercalate and deintercalate back and forth between the positive electrode plate and the negative electrode plate. The electrolyte conducts ions between the positive electrode plate and the negative electrode plate. The separator is disposed between the positive electrode plate and the negative electrode plate, primarily to prevent short circuits between the positive and negative electrodes while allowing ions to pass through.

In some embodiments, the positive electrode plate includes a positive electrode current collector and a positive electrode active material layer disposed on at least one side of the positive electrode current collector, where the positive electrode active material layer includes a positive electrode active material.

The battery disclosed in the embodiments of the present application can be used in electric apparatuses that use a battery as a power source, in power systems including the battery disclosed in the present application, or in various energy storage systems that use a battery as an energy storage element. Electric apparatuses may include mobile phones, tablets, laptops, electric toys, electric tools, electric bicycles, electric vehicles, ships, spacecraft, and the like. Electric toys may include fixed or mobile electric toys, such as gaming consoles, electric car toys, electric ship toys, and electric airplane toys. Spacecraft may include airplanes, rockets, space shuttles, and spaceships.

It should be understood that the technical solutions described in the embodiments of the present application are not limited to the batteries and electric apparatuses described above but are also applicable to all other electric apparatuses that include batteries or use batteries. For brevity, the following embodiments are described using electric vehicles as an example.

According to a first aspect of the present application, a positive electrode active material is provided, where the positive electrode active material includes a sodium manganese oxide, the sodium manganese oxide includes a first phase and a second phase, the first phase includes alternating first sodium ion layers and first transition metal layers, and the second phase includes alternating second sodium ion layers and second transition metal layers; and in the first phase, an interlayer spacing between adjacent first transition metal layers in a direction perpendicular to a (001) crystal plane is $d_1$, in the second phase, an interlayer spacing between adjacent second transition metal layers in the direction perpendicular to the (001) crystal plane is $d_2$, and $d_1$-$d_2$ ranges from 0.01 nm to 0.02 nm. Since the interlayer spacing of the first phase is slightly larger than that of the second phase, the strain experienced by the first phase and the second phase during sodium insertion and extraction is reduced, minimizing defects and cracks in the crystal structure and enhancing the cycling stability of the positive electrode active material.

In some embodiments, when $d_1$-$d_2$ is less than 0.01 nm, the "locking " effect between the first phase and the second phase is not significant, failing to improve the cycling stability of the positive electrode active material; when $d_1$-$d_2$ is greater than 0.02 nm, the interlayer spacing difference between the first phase and the second phase is too large, resulting in poor synergistic effects between the two phases during charge-discharge cycles, which is detrimental to sodium ion insertion and extraction.

As an example, $d_1$-$d_2$ may be 0.01 nm, 0.011 nm, 0.012 nm, 0.013 nm, 0.014 nm, 0.015 nm, 0.016 nm, 0.017 nm, 0.018 nm, 0.019 nm, or 0.02 nm.

According to an embodiment of the present application, the sodium manganese oxide may include a doping element Q, thereby further enhancing the structural stability and specific capacity of the positive electrode active material.

In some embodiments, the doping element Q may include a first doping element Q1, where the first doping element partially substitutes sodium in the sodium manganese oxide, and the first doping element includes at least one of Li, K, Ca, La, and Sr. This configuration can increase the rate of sodium ion insertion and extraction.

In some embodiments, the doping element Q may include a second doping element Q2, where the second doping element partially substitutes manganese in the sodium manganese oxide, and the second doping element includes at least one of Fe, Co, Ni, Cu, Zn, Ga, Li, B, Mg, Al, Si, Ti, Y, Zr, Nb, Mo, In, Sn, Sb, La, Ce, Ta, W, and Bi. This configuration can enhance the specific capacity, average discharge voltage, and structural stability of the positive electrode active material.

In some embodiments, the doping element Q may include a third doping element Q3, where the third doping element partially substitutes oxygen in the sodium manganese oxide, and the third doping element includes at least one of F and Cl. This configuration can further enhance the crystal structure stability of the positive electrode active material.

According to an embodiment of the present application, the sodium manganese oxide may satisfy a chemical formula: $Na_xQ1_aMn_yQ2_bO_zQ3_c$, where $0.5 < x \leq 1.2$, $0 \leq a \leq 0.5$, and $0.5 < x+a \leq 1.2$; $0 < y$, $0 \leq b \leq 0.6$, and $y+b=1$; and $1.8 \leq z \leq 2.2$, $0 \leq c \leq 0.2$, and $1.8 \leq z+c \leq 2.2$. This configuration can enhance the structural stability of the positive electrode active material during cycling.

In some embodiments, after processes such as sodium supplementation and formation, as well as long-term cycling, the sodium content in the positive electrode active material may exceed the standard value due to sodium supplementation or fall below the standard value after formation and long-term cycling; and the oxygen content in the positive electrode active material may also fall below the standard value in later cycles due to the release of lattice oxygen.

In some embodiments, by controlling the content of each element in the sodium manganese oxide, the positive electrode active material can achieve a higher specific capacity, and an appropriate difference can be maintained between the interlayer spacing of adjacent first transition metal layers in the first phase in a direction perpendicular to a (001) crystal plane and the interlayer spacing of adjacent second transition metal layers in the second phase in a direction perpendicular to a (001) crystal plane, allowing the first phase and the second phase with the aforementioned interlayer spacing difference to synergistically enhance the cycling stability of the positive electrode active material.

According to an embodiment of the present application, the sodium manganese oxide satisfies a chemical formula: $Na_xQ1_aMn_yFe_dNi_eQ2_bO_zQ3_c$, where $y+d+e+b=1$, $0.1 \leq d \leq 0.6$, and $0.1 \leq e \leq 0.6$, and in the first phase, a diffraction peak intensity of the first transition metal layer/the first sodium ion layer for X-rays within $2\theta$ ranges from 13° to 16.2° is $S_1$, and in the second phase, a diffraction peak intensity of the second transition metal layer/the second sodium ion layer for X-rays within $2\theta$ ranges from 16.2° to 17° is $S_2$, where $S_1/(S_2+S_1) \times e \leq 0.1$. This configuration can enhance the specific capacity, average discharge voltage, and structural stability of the positive electrode active material during cycling.

In some embodiments, a phase with a larger interlayer spacing in the positive electrode active material facilitates high-voltage phase transitions, thereby effectively increasing the average discharge voltage and energy density of the positive electrode active material.

In other embodiments, Ni in the positive electrode active material provides charge compensation during charge-discharge cycles by changing valence, thereby increasing the specific capacity of the positive electrode active material. However, during charge-discharge cycles, Ni located in the transition metal layer of sodium manganese oxide with a larger interlayer spacing tends to migrate to the sodium ion layer, leading to the destruction of the layered structure of sodium manganese oxide and reduced cycling stability.

As an example, when $S_1/(S_2+S_1) \times e \leq 0.1$, the positive electrode active material exhibits a higher specific capacity, higher average discharge voltage, and better cycling stability.

According to an embodiment of the present application, $0.05 \leq S_1/(S_2+S_1)$, optionally, $0.1 \leq S_1/(S_2+S_1)$. This configuration can further enhance the average discharge voltage and structural stability of the positive electrode active material during cycling charge-discharge processes.

According to an embodiment of the present application, the first phase of the sodium manganese oxide satisfies a chemical formula: $Na_{x1}Q1_{a1}Mn_{y1}Fe_{d1}Ni_{e1}Q2_{b1}O_zQ3_{c1}$, where $0.6 < x1 \leq 0.8$, $0 \leq a1 \leq 0.6$, $0 \leq b1 \leq 0.6$, $y1+d1+e1+c1=1$, and $0 \leq (d1 \times e1)/(y1^2) \leq 0.5$; and the second phase of the sodium manganese oxide satisfies a chemical formula: $Na_{x2}Q1_{a2}Mn_{y2}Fe_{d2}Ni_{e2}Q2_{b2}O_zQ3_{c2}$, where $0.7 < x2 \leq 1$, $0.1 \leq a2 \leq 0.6$, $0.1 \leq b2 \leq 0.6$, $y2+d2+e2+c2=1$, and $0.1 \leq (d2 \times e2)/(y2^2) \leq 1$. This configuration can further enhance the structural stability and specific capacity of the positive electrode active material.

In some embodiments, during charge-discharge cycles, Ni and Fe located in the first transition metal layer of the first phase with a larger interlayer spacing tend to migrate to the first sodium ion layer, leading to the destruction of the layered structure of sodium manganese oxide and reduced cycling stability. By controlling the content of Fe and Ni substituting manganese in the first phase with a larger interlayer spacing to be relatively low, that is, satisfying $0 \leq (d1 \times e1)/(y1^2) \leq 0.5$, the first phase structure is made more stable, less prone to destruction due to the migration of Fe and Ni, thereby enhancing the structural stability of the positive electrode active material during charge-discharge cycles.

In some instances, since Fe and Ni located in the second transition metal layer of the second phase with a smaller interlayer spacing are less likely to migrate, controlling the content of Fe and Ni to be relatively high, that is, $0.1 \leq (d1 \times e1)/(y1^2) \leq 1$, can increase the specific capacity of the positive electrode active material.

According to an embodiment of the present application, in the first phase, the diffraction peak intensity of the first transition metal layer/the first sodium ion layer for X-rays within 20 ranges from 13° to 16.2° is $S_1$, in the second phase, the diffraction peak intensity of the second transition metal layer/the second sodium ion layer for X-rays within 20 ranges from 16.2° to 17° is $S_2$, and $S_1$ and $S_2$ satisfy $0.01 \leq S_1/(S_1+S_2) \leq 0.5$. This configuration enables the positive electrode active material to have both high cycling stability and high specific capacity. Optionally, $0.05 \leq S_1/(S_1+S_2) \leq 0.5$. This configuration can further enhance the structural stability and specific capacity of the positive electrode active material.

As an example, the diffraction peak intensity of the transition metal layer/sodium ion layer for X-rays within a specific 20 range in the positive electrode active material refers to the diffraction peak intensity of the crystal structure formed by adjacent transition metal layers and sodium ion layers for X-rays in the positive electrode active material within the specific $2\theta$ range.

As an example, the diffraction peak intensity $S_1$ of the first transition metal layer/first sodium ion layer for X-rays in the first phase and the diffraction peak intensity $S_2$ of the second transition metal layer/second sodium ion layer for X-rays in the second phase can be obtained by the following method: performing an XRD test on the positive electrode active material using CuK$\alpha$ radiation as the source, with a wavelength $\lambda$=1.5406 Å, scanning a 20 angle range of 5°-60° at a scanning rate of 4°/min, where the $2\theta$ peak position is within 15°-17°, and obtaining the respective diffraction peak intensities through full-spectrum fitting with Rietveld refinement. Generally, the diffraction peak intensity of the positive electrode active material for X-rays within 20 ranging from 13° to 16.2° is $S_1$, and the diffraction peak intensity within $2\theta$ ranging from 16.2° to 17° is $S_2$.

As an example, for the first phase, after completing the aforementioned XRD test, the angle corresponding to the 002 crystal plane, generally with a 20 peak position within 15°-17°, is used to calculate the interlayer spacing $d_{002}$ of the 002 crystal plane based on the Bragg equation $2d\sin\theta=\lambda$, noting that each unit cell for the 002 crystal plane includes three first transition metal layers; for the second phase, after completing the test, the angle corresponding to the 003 crystal plane, generally with a 20 peak position within 15°-17°, is used to calculate the interlayer spacing $d_{003}$ of the 003 crystal plane based on the Bragg equation $2d\sin\theta=\lambda$, noting that each unit cell for the 003 crystal plane includes three second transition metal layers. The interlayer spacing of adjacent transition metal layers in the first phase and the second phase in a direction perpendicular to the (001) crystal plane can be obtained from $d_{002}$ and $d_{003}$.

According to an embodiment of the present application, 0.550 nm$\leq d_1 \leq$0.565 nm, and 0.530 nm$\leq d_2 \leq$0.545 nm. This configuration can leverage the synergistic effect of the first phase and the second phase during cycling to enhance the structural stability of the positive electrode active material.

As an example, the elemental composition of the positive electrode active material can be tested using inductively coupled plasma emission spectroscopy, specifically following the standard EPA6010D-2014 "Inductively Coupled Plasma Atomic Emission Spectroscopy. " The sample is chemically digested into a solution, atomized into a plasma to excite characteristic spectral lines of the elements, and the elemental content is qualitatively and quantitatively analyzed based on the wavelength and intensity (proportional to concentration) of the spectral lines. The composition of each phase in the positive electrode active material can be obtained by performing ion polishing on a cross-section of the sample and conducting elemental analysis on particles of different phases.

According to an embodiment of the present application, the first phase is a P2 phase with a space group of P63/mmc; and the second phase is an O3 phase with a space group of $R\overline{3}m$. Due to the inconsistent oxygen layer arrangement between the P2 phase and the O3 phase, the "locking " effect between the first phase and the second phase is enhanced, thereby further improving the cycling stability of the positive electrode active material.

As an example, the space group of the positive electrode active material can be confirmed by comparing the XRD diffraction peaks of the positive electrode active material with standard cards in XRD analysis software.

According to an embodiment of the present application, at 25°C, a pH of a deionized water solution of the positive electrode active material with a mass concentration of 2 g/18 mL may be 7-13; optionally, the pH is 11-12.5.

As an example, the pH of the positive electrode active material may be 7, 7.5, 8, 8.5, 9, 9.5, 10, 10.5, 11, 11.5, 12, 12.5, or 13.

As an example, the positive electrode active material may exhibit weak alkalinity, facilitating the subsequent formation of a positive electrode slurry suitable for applying, with a pH of 7-13. Optionally, the pH of the positive electrode active material may be 11-13, and further, the pH may be 11-12.5, thereby reducing gelation during slurry preparation and improving the applying stability of the positive electrode slurry.

As an example, the pH of the positive electrode active material is measured by the following method: after determining the elemental composition of the positive electrode active material by ICP, 2 g of the positive electrode active material is added to 18 mL of deionized water, stirred at room temperature (25°C) until completely dissolved, allowed to stand for 30 minutes, and the pH of the resulting supernatant is tested, with the measured pH being the pH of the positive electrode active material.

According to a second aspect of the present application, a method for preparing the foregoing positive electrode active material is provided, where the method includes: providing a precursor; performing a calcination treatment on the precursor to obtain the positive electrode active material, where the positive electrode active material includes a sodium manganese oxide, the sodium manganese oxide includes a first phase and a second phase, the first phase includes alternating first sodium ion layers and first transition metal layers, the second phase includes alternating second sodium ion layers and second transition metal layers; and in the first phase, an interlayer spacing between adjacent first transition metal layers in a direction perpendicular to a (001) crystal plane is $d_1$, in the second phase, an interlayer spacing between adjacent second transition metal layers in the direction perpendicular to the (001) crystal plane is $d_2$, and $d_1$-$d_2$ ranges from 0.01 nm to 0.02 nm. This method enables the preparation of the foregoing positive electrode active material using a relatively simple process.

According to an embodiment of the present application, the providing a precursor includes: providing a mixture of a first sodium manganese oxide and a second sodium manganese oxide, where a molar amount of the first sodium manganese oxide in the mixture is $m_1$, a molar amount of the second sodium manganese oxide in the mixture is $m_2$, and a molar ratio of the first sodium manganese oxide to the second sodium manganese oxide $m_1$:$m_2$ ranges from (1:2) to (1:10), where an interlayer spacing between adjacent transition metal layers in the first sodium manganese oxide in the direction perpendicular to the (001) crystal plane is 0.550 nm-0.565 nm, and an interlayer spacing between adjacent transition metal layers in the second sodium manganese oxide in the direction perpendicular to the (001) crystal plane is 0.530 nm-0.545 nm. This configuration enables the preparation of the foregoing positive electrode active material through a two-step calcination process, precisely controlling the interlayer spacing between adjacent first transition metal layers in the first phase in the direction perpendicular to the (001) crystal plane and the interlayer spacing between adjacent second transition metal layers in the second phase in the direction perpendicular to the (001) crystal plane.

According to an embodiment of the present application, the calcination treatment satisfies at least one of the following conditions: a temperature of the calcination treatment may be 800°C-900°C; and a duration of the calcination treatment may be 0.5 h-20 h.

As an example, the temperature for calcining the mixture of the first sodium manganese oxide and the second sodium manganese oxide may be 800°C, 810°C, 820°C, 830°C, 840°C, 850°C, 860°C, 870°C, 880°C, 890°C, or 900°C.

When the calcination temperature for the mixture of the first sodium manganese oxide and the second sodium manganese oxide is 800°C-900°C, the interlayer spacing $d_1$ between adjacent first transition metal layers in the first phase in the direction perpendicular to the (001) crystal plane and the interlayer spacing $d_2$ between adjacent second transition metal layers in the second phase in the direction perpendicular to the (001) crystal plane can be precisely controlled, ensuring that the difference between $d_1$ and $d_2$ falls within the aforementioned range. This enables a "locking " effect between the first phase and the second phase during the contraction and expansion of the layered structure of sodium manganese oxide, reducing the stress experienced by the layered structure during sodium insertion and extraction, thereby reducing strain in the crystal structure, minimizing defects and cracks due to excessive strain, and enhancing the stability of the positive electrode active material during charge-discharge cycles.

As an example, the duration for calcining the mixture of the first sodium manganese oxide and the second sodium manganese oxide may be 0.5 h, 1 h, 2 h, 3 h, 4 h, 5 h, 6 h, 7 h, 8 h, 9 h, 10 h, 11 h, 12h, 13 h, 14 h, 15 h, 16 h, 17 h, 18 h, 19 h, or 20 h.

According to an embodiment of the present application, providing the first sodium manganese oxide includes: providing a mixture of a sodium source, a manganese oxide, and a doping element oxide, and performing a first calcination treatment, where a molar amount of the sodium source in the mixture is $m_{1-1}$, a molar amount of the manganese oxide in the mixture is $m_{2-1}$, a molar amount of the doping element oxide in the mixture is $m_{3-1}$, and $m_{1-1}$:$m_{2-1}$:$m_{3-1}$= (0.5-0.8):(0.6-0.95):(0-0.4). This configuration enables the preparation of the first sodium manganese oxide with the desired interlayer spacing.

According to an embodiment of the present application, the first calcination treatment satisfies at least one of the following conditions: a temperature of the first calcination treatment may be 700°C-900°C; and a duration of the first calcination treatment may be 10 h-20 h.

As an example, the temperature for the first calcination treatment during the synthesis of the first sodium manganese oxide may be 700°C, 710°C, 720°C, 730°C, 740°C, 750°C, 760°C, 770°C, 780°C, 790°C, 800°C, 810°C, 820°C, 830°C, 840°C, 850°C, 860°C, 870°C, 880°C, 890°C, or 900°C.

As an example, the duration for the first calcination treatment during the synthesis of the first sodium manganese oxide may be 10 h, 11 h, 12 h, 13 h, 14 h, 15 h, 16 h, 17 h, 18 h, 19 h, or 20 h.

In some embodiments, under the aforementioned ratios of the sodium source, manganese oxide, and doping element oxide, and the conditions of the first calcination treatment, a first sodium manganese oxide with an interlayer spacing of 0.550 nm-0.565 nm between adjacent transition metal layers in the direction perpendicular to the (001) crystal plane can be obtained.

According to an embodiment of the present application, providing the second sodium manganese oxide includes:

providing a mixture of a sodium source, a manganese oxide, and a doping element oxide, and performing a second calcination treatment, where a molar amount of the sodium source in the mixture is $m_{1-2}$, a molar amount of the manganese oxide in the mixture is $m_{2-2}$, a molar amount of the doping element oxide in the mixture is $m_{3-2}$, and $m_{1-2}:m_{2-2}:m_{3-2}=$ (0.8-1.1):(0.3-0.5):(0-0.6).

According to an embodiment of the present application, the second calcination treatment satisfies at least one of the following conditions: a temperature of the second calcination treatment is 800°C-1100°C; and a duration of the second calcination treatment is 10 h-20 h.

As an example, the temperature for the second calcination treatment during the synthesis of the second sodium manganese oxide may be 800°C, 810°C, 820°C, 830°C, 840°C, 850°C, 860°C, 870°C, 880°C, 890°C, 900°C, 910°C, 920°C, 930°C, 940°C, 950°C, 960°C, 970°C, 980°C, 990°C, 1000°C, 1010°C, 1020°C, 1030°C, 1040°C, 1050°C, 1060°C, 1070°C, 1080°C, 1090°C, or 1100°C.

As an example, the duration for the second calcination treatment during the synthesis of the second sodium manganese oxide may be 10 h, 11 h, 12 h, 13 h, 14 h, 15 h, 16 h, 17 h, 18 h, 19 h, or 20 h.

In some embodiments, under the aforementioned ratios of the sodium source, manganese oxide, and doping element oxide, and the conditions of the second calcination treatment, a second sodium manganese oxide with an interlayer spacing of 0.530 nm-0.545 nm between adjacent transition metal layers in the direction perpendicular to the (001) crystal plane can be obtained.

As an example, the sodium source may include at least one of $Na_2CO_3$, $NaHCO_3$, $NaOH$, and $Na_2O_2$.

As an example, the manganese oxide may include at least one of $Mn_2O_3$, $Mn_3O_4$, $MnO$, and $MnO_2$.

It should be noted that the relevant parameters in the method for preparing the positive electrode active material described above may refer to some or all of the technical features in the foregoing embodiments. For parts not described in the embodiments related to the method for preparing the positive electrode active material, reference may also be made to the foregoing embodiments and related drawings, which are not repeated herein.

The description of the various embodiments above tends to emphasize the differences between the embodiments, and their similarities or identical aspects can be cross-referenced. For brevity, they are not repeated herein.

According to a third aspect of the present application, a positive electrode plate is provided, where the positive electrode plate includes the foregoing positive electrode active material, and/or a positive electrode active material prepared using the foregoing method.

In some embodiments, the positive electrode plate includes a positive electrode current collector and a positive electrode active material layer disposed on at least one side of the positive electrode current collector, where the positive electrode active material layer includes the positive electrode active material.

In the present application, the positive electrode current collector may be a metal foil or a composite current collector. For example, the metal foil may be aluminum foil. The composite current collector may include a polymer base layer and a metal layer formed on at least one side of the polymer base layer, where the material of the metal layer includes, but is not limited to, aluminum, aluminum alloy, nickel, nickel alloy, titanium, titanium alloy, silver, and silver alloy; and the polymer material of the polymer base layer may be polypropylene (PP), polyethylene terephthalate (PET), polybutylene terephthalate (PBT), polystyrene (PS), polyethylene (PE), or the like.

In some embodiments, the positive electrode active material is the positive electrode active substance in the positive electrode active material layer. In addition to the positive electrode active material, the positive electrode active material layer may optionally include a conductive agent and/or a binder. As an example, the conductive agent may include at least one of superconducting carbon, acetylene black, carbon black, Ketjen black, carbon dots, carbon nanotubes, graphene, and carbon nanofibers; the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

As an example, the positive electrode current collector has two opposing surfaces in its thickness direction, and the positive electrode active material layer is disposed on either or both of the opposing surfaces of the positive electrode current collector.

The present application does not particularly limit the preparation method of the positive electrode plate, and it can be prepared with reference to existing methods. For example, a positive electrode slurry is applied onto the positive electrode current collector, dried, and cold-pressed to form the positive electrode plate. The positive electrode slurry may be formed by dispersing components such as the positive electrode active material, an optional conductive agent, and an optional binder in a solvent (for example, N-methylpyrrolidone) and stirring uniformly.

Additionally, the positive electrode plate of the present application does not exclude other additional functional layers besides the positive electrode active material layer. For example, the positive electrode plate may further include a conductive undercoating layer (for example, composed of a conductive agent and a binder) disposed between the positive electrode current collector and the positive electrode active material layer. As another example, the positive electrode plate may further include a protective layer covering the surface of the positive electrode active material layer.

According to a fourth aspect of the present application, a battery is provided, where the battery includes the foregoing positive electrode plate, the positive electrode plate includes a positive electrode current collector and a positive electrode active material layer disposed on at least one side of the positive electrode current collector, where the positive electrode active material layer includes the foregoing positive electrode active material, and/or a positive electrode active material prepared using the foregoing method.

In embodiments of the present application, the battery may be a secondary battery. For example, the battery 5 in FIG. 2 may be a sodium-ion battery or the like.

In some embodiments, the battery includes a positive electrode plate, a negative electrode plate, and a separator. During battery charging and discharging, active ions intercalate and deintercalate back and forth between the positive electrode plate and the negative electrode plate. The electrolyte conducts ions between the positive electrode plate and the negative electrode plate. The separator is disposed between the positive electrode plate and the negative electrode plate to prevent short circuits between the positive and negative electrodes while allowing ions to pass through.

In some embodiments, the electrode assembly includes a positive electrode plate, a negative electrode plate, and a separator disposed between the positive electrode plate and the negative electrode plate.

In some embodiments, the electrode assembly is a wound structure. The positive electrode plate and the negative electrode plate are wound to form the wound structure.

In some embodiments, the electrode assembly is a stacked structure.

As an example, multiple positive electrode plates and multiple negative electrode plates may be provided, with the multiple positive electrode plates and multiple negative electrode plates alternately stacked.

As an example, multiple positive electrode plates may be provided, and the negative electrode plate is folded to form multiple stacked folding segments, with one positive electrode plate sandwiched between adjacent folding segments.

As an example, both the positive electrode plate and the negative electrode plate are folded to form multiple stacked folding segments.

As an example, multiple separators may be provided, each disposed between any adjacent positive electrode plate or negative electrode plate.

As an example, the separator may be continuously disposed, arranged between any adjacent positive electrode plate or negative electrode plate by folding or winding.

In some embodiments, the shape of the electrode assembly may be cylindrical, flat, or prismatic.

In some embodiments, the electrode assembly is provided with tabs, which can conduct current from the electrode assembly. The tabs include a positive tab and a negative tab.

In some embodiments, the positive electrode plate may be the foregoing positive electrode plate.

In some embodiments, the negative electrode plate may include a negative electrode current collector, which may be a metal foil, a metal foam, or a composite current collector. For example, the metal foil may include silver-treated aluminum or stainless steel, stainless steel, copper, aluminum, nickel, carbon electrode, or titanium. The metal foam may include nickel foam, copper foam, aluminum foam, alloy foam, or carbon foam. The composite current collector may include a polymer material base layer and a metal layer. The composite current collector may be formed by forming a metal material (for example, copper, copper alloy, nickel, nickel alloy, titanium, titanium alloy, silver, or silver alloy) on a polymer material substrate (for example, a substrate of polypropylene, polyethylene terephthalate, polybutylene terephthalate, polystyrene, or polyethylene).

In some embodiments, the negative electrode plate may be a metal foil rolled or coated with an inert metal powder on the surface of the current collector.

In some embodiments, the negative electrode current collector may be a composite current collector, for example, the composite current collector may include at least one of carbon cloth, carbon film, carbonaceous material, porous current collector, alloy-modified current collector, lithium-affinity modified current collector, and sodium-affinity modified current collector.

In some embodiments, the negative electrode plate may include a negative electrode current collector and a negative electrode active material layer disposed on at least one side of the negative electrode current collector, where the negative electrode active material layer may include a negative electrode active material, and the negative electrode active material may be a high-capacity material, for example, the negative electrode active material may include at least one of natural graphite, artificial graphite, soft carbon, hard carbon, silicon-based material, tin-based material, or lithium titanate.

As an example, the silicon-based material may include at least one of elemental silicon, silicon oxide, silicon-carbon composite, silicon-nitrogen composite, and silicon alloy material; and the tin-based material may include at least one of elemental tin, tin oxide, and tin alloy material.

The present application does not particularly limit the type of separator, and any porous structure separator with good chemical and mechanical stability may be used.

As an example, the main material of the separator may include at least one of glass fiber, non-woven fabric, polyethylene, polypropylene, ceramic, and polyvinylidene fluoride. The separator may be a single-layer film or a multilayer composite film. When the separator is a multilayer composite film, the materials of each layer may be the same or different.

The separator may be a standalone component located between the positive electrode plate and the negative electrode plate, or it may be attached to the surface of the positive electrode plate and/or the negative electrode plate.

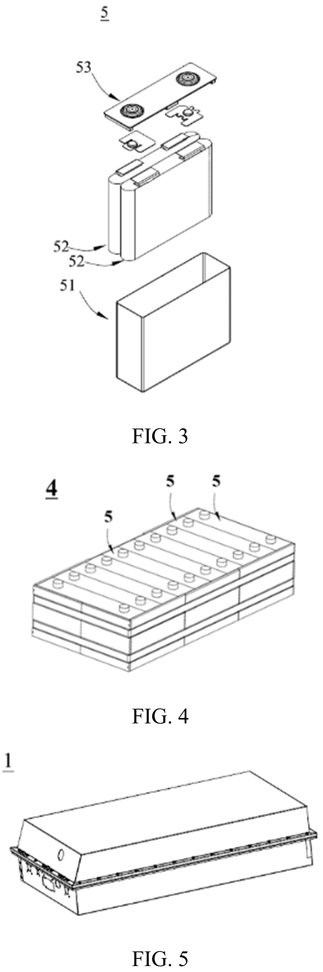

As an example, referring to FIG. 3, the positive electrode plate, negative electrode plate, and separator may be formed into an electrode assembly 52 through a winding process or a stacking process. The electrode assembly 52 is encapsulated in a receiving cavity, and the electrolyte fills the internal space of the electrode assembly 52. The number of electrode assemblies 52 contained in the battery 5 may be one or more, and those skilled in the art may select according to specific practical needs.

In the present application, the electrolyte may be selected with reference to existing secondary batteries. As an example, the electrolyte includes an organic solvent, a sodium salt, and optional additives. Sodium salts include, but are not limited to, at least one of $NaPF_6$, $NaClO_4$, $NaBCl_4$, $NaSO_3CF_3$, and $Na(CH_3)C_6H_4SO_3$. Organic solvents include, but are not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, additives in the electrolyte may include negative electrode film-forming additives and positive electrode film-forming additives; they may also include additives that improve certain battery performances, such as additives that improve overcharge performance, or additives that improve high-temperature and/or low-temperature performance. As an example, additives may include at least one of vinylene carbonate (VC), vinyl ethylene carbonate (VEC), ethylene sulfate (DTD), propylene sulfate, ethylene sulfite (ES), 1,3-propane sultone (PS), 1,3-propylene sultone (PST), sulfonate cyclic quaternary ammonium salt, succinic anhydride, succinonitrile (SN), adiponitrile (AND), tris(trimethylsilyl) phosphate (TMSP), and tris(trimethylsilyl) borate (TMSB).

As an example, the present application does not particularly limit the shape of the battery, which may be cylindrical, square, or any other shape. For example, FIG. 2 shows a battery 5 with a square structure as an example. Specifically, referring to FIG. 3, the outer packaging of the battery 5 may include a housing 51 and a top cover assembly 53. The housing 51 may include a bottom plate and side plates connected to the bottom plate, with the bottom plate and side plates enclosing a receiving cavity. The housing 51 has an opening communicating with the receiving cavity, and the top cover assembly 53 can cover the opening to seal the receiving cavity.

As an example, batteries can be assembled into a battery module, and the number of batteries contained in the battery module may be one or more, with the specific number selected by those skilled in the art based on the application and capacity of the battery module. FIG. 4 shows a battery module 4 as an example. Referring to FIG. 4, in the battery module 4, the battery 5 shown in FIG. 2 may be used as a battery cell, and multiple battery cells may be sequentially arranged along the length direction of the battery module 4. Of course, they may also be arranged in any other manner. Further, the multiple battery cells may be fixed by fasteners. The battery module 4 may also include a housing with a receiving space, in which the multiple battery cells are accommodated.

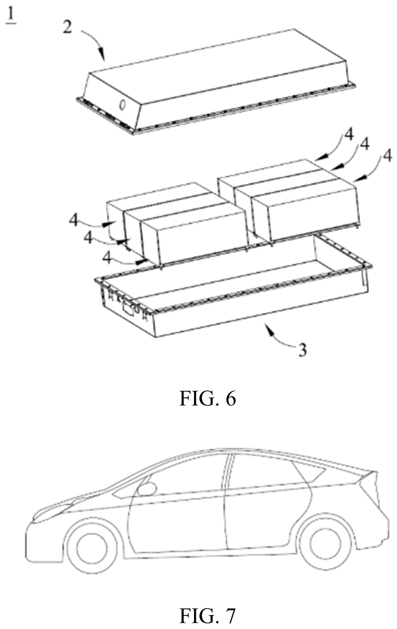

As an example, the aforementioned battery module can also be assembled into a battery pack, and the number of battery modules contained in the battery pack may be one or more, with the specific number selected by those skilled in the art based on the application and capacity of the battery pack. FIG. 5 and FIG. 6 show a battery pack 1 as an example. Referring to FIG. 5 and FIG. 6, the battery pack 1 may include a battery box and multiple battery modules 4 disposed in the battery box. The battery box includes an upper case 2 and a lower case 3, with the upper case 2 covering the lower case 3 to form a sealed space for accommodating the battery modules 4. The multiple battery modules 4 may be arranged in the battery box in any manner.

According to a fifth aspect of the present application, an electric apparatus is provided, where the electric apparatus includes the foregoing battery 5. This electric apparatus possesses all the features and advantages of the foregoing battery 5, which are not repeated herein.

Batteries, battery modules, or battery packs can be used as a power source for an electric apparatus or as an energy storage unit for an electric apparatus. Electric apparatuses may include mobile devices (for example, mobile phones and laptops), electric vehicles (for example, pure electric vehicles, hybrid electric vehicles, plug-in hybrid electric vehicles, electric bicycles, electric scooters, electric golf carts, and electric trucks), electric trains, ships, satellites, energy storage systems, and the like, but are not limited thereto. The electric apparatus may select a battery, battery module, or battery pack based on its usage requirements.

As an example, FIG. 7 shows an electric apparatus as an example. The electric apparatus is a pure electric vehicle, a hybrid electric vehicle, or a plug-in hybrid electric vehicle. To meet the high power and high energy density requirements of the electric apparatus for batteries, a battery pack or battery module may be used.

As an example, the electric apparatus may also be a mobile phone, tablet, laptop, or the like. Such devices typically require thin and lightweight designs and may use a battery as a power source.

The following describes examples of the present application. The examples described below are exemplary and intended only to explain the present application, not to be construed as limiting the present application. For examples where specific techniques or conditions are not specified, they are conducted according to techniques or conditions described in the literature in the field or according to product specifications. Reagents or instruments used without specifying the manufacturer are conventional products commercially available.

Example 1

Synthesis of first sodium manganese oxide:

A total of 30 g of a sample was weighed, consisting of $Na_2CO_3$, $Mn_2O_3$, and NiO in a molar ratio of Na:Mn:Ni = 0.75:0.8:0.2. The obtained sample was pre-ground in an agate mortar and then milled in a planetary ball mill for 1 hour to obtain a precursor mixture. The precursor mixture was uniformly placed in an open crucible and heated in a muffle furnace from room temperature to 850°C at a heating rate of 5°C/min. The temperature was maintained at 850°C for 15 hours, followed by natural cooling, whereby the first sodium manganese oxide $Na_{0.7}Mn_{0.8}Ni_{0.2}O_2$ was obtained.

Synthesis of second sodium manganese oxide:

A total of 30 g of a sample was weighed, consisting of $Na_2CO_3$, $Mn_2O_3$, $Fe_2O_3$, NiO, and CuO in a molar ratio of Na:Mn:Fe:Ni:Cu = 0.95:0.4:0.3:0.2:0.1. The obtained sample was pre-ground in an agate mortar and then milled in a planetary ball mill for 1 hour to obtain a precursor mixture. The precursor mixture was uniformly placed in an open crucible and heated in a muffle furnace from room temperature to 950°C at a heating rate of 5°C/min. The temperature was maintained at 950°C for 15 hours, followed by natural cooling, whereby the second sodium manganese oxide $Na_{0.9}Mn_{0.4}Fe_{0.3}Ni_{0.2}Cu_{0.1}O_2$ was obtained.

Synthesis of positive electrode active material:

A total of 30 g of the first sodium manganese oxide and the second sodium manganese oxide, obtained as described above, was taken in a molar ratio of 1:3. The sample was pre-ground in an agate mortar and then milled in a planetary ball mill for 1 hour to obtain a precursor mixture. The precursor mixture was uniformly placed in an open crucible and heated in a muffle furnace from room temperature to 800°C at a heating rate of 5°C/min. The temperature was maintained at 800°C for 10 hours, followed by natural cooling, whereby the positive electrode active material was obtained.

Example 2

The synthesis method of the first sodium manganese oxide in Example 2 was identical to that in Example 1. The differences are as follows:

Synthesis of second sodium manganese oxide:

A total of 30 g of a sample was weighed, consisting of $Na_2CO_3$, $Mn_2O_3$, $Fe_2O_3$, NiO, and $TiO_2$ in a molar ratio of Na:Mn:Fe:Ni:Ti = 0.95:0.4:0.3:0.2:0.1. The obtained sample was pre-ground in an agate mortar and then milled in a planetary ball mill for 1 hour to obtain a precursor mixture. The precursor mixture was uniformly placed in an open crucible and heated in a muffle furnace from room temperature to 950°C at a heating rate of 5°C/min. The temperature was maintained at 950°C for 15 hours, followed by natural cooling, whereby the second sodium manganese oxide $Na_{0.9}Mn_{0.4}Fe_{0.3}Ni_{0.2}Ti_{0.1}O_2$ was obtained.

Synthesis of positive electrode active material:

A total of 30 g of the first sodium manganese oxide and the second sodium manganese oxide, obtained as described above, was taken in a molar ratio of 1:9. The sample was pre-ground in an agate mortar and then milled in a planetary ball mill for 1 hour to obtain a precursor mixture. The precursor mixture was uniformly placed in an open crucible and heated in a muffle furnace from room temperature to 800°C at a heating rate of 5°C/min. The temperature was maintained at 800°C for 10 hours, followed by natural cooling, whereby the positive electrode active material was obtained.

Example 3

The synthesis method of the first sodium manganese oxide in Example 3 was identical to that in Example 1. The differences are as follows:

Synthesis of second sodium manganese oxide:

A total of 30 g of a sample was weighed, consisting of $Na_2CO_3$, $Mn_2O_3$, $Fe_2O_3$, NiO, and ZnO in a molar ratio of Na:Mn:Fe:Ni:Zn = 0.95:0.4:0.3:0.2:0.1. The obtained sample was pre-ground in an agate mortar and then milled in a planetary ball mill for 1 hour to obtain a precursor mixture. The precursor mixture was uniformly placed in an open crucible and heated in a muffle furnace from room temperature to 950°C at a heating rate of 5°C/min. The temperature was maintained at 950°C for 15 hours, followed by natural cooling, whereby the second sodium manganese oxide $Na_{0.9}Mn_{0.4}Fe_{0.3}Ni_{0.2}Zn_{0.1}O_2$ was obtained.

Synthesis of positive electrode active material:

A total of 30 g of the first sodium manganese oxide and the second sodium manganese oxide, obtained as described above, was taken in a molar ratio of 1:3. The sample was pre-ground in an agate mortar and then milled in a planetary ball mill for 1 hour to obtain a precursor mixture. The precursor mixture was uniformly placed in an open crucible and heated in a muffle furnace from room temperature to 800°C at a heating rate of 5°C/min. The temperature was maintained at 800°C for 10 hours, followed by natural cooling, whereby the positive electrode active material was obtained.

Example 4

The synthesis methods of the first sodium manganese oxide and the second sodium manganese oxide in Example 4 were identical to those in Example 1. The differences are as follows:

Synthesis of positive electrode active material:

A total of 30 g of the first sodium manganese oxide and the second sodium manganese oxide, obtained as described above, was taken in a molar ratio of 1:4. The sample was pre-ground in an agate mortar and then milled in a planetary ball mill for 1 hour to obtain a precursor mixture. The precursor mixture was uniformly placed in an open crucible and heated in a muffle furnace from room temperature to 800°C at a heating rate of 5°C/min. The temperature was maintained at 800°C for 10 hours, followed by natural cooling, whereby the positive electrode active material was obtained.

Example 5

The synthesis methods of the first sodium manganese oxide and the second sodium manganese oxide in Example 5 were identical to those in Example 1. The differences are as follows:

Synthesis of positive electrode active material:

A total of 30 g of the first sodium manganese oxide and the second sodium manganese oxide, obtained as described above, was taken in a molar ratio of 3:1. The sample was pre-ground in an agate mortar and then milled in a planetary ball mill for 1 hour to obtain a precursor mixture. The precursor mixture was uniformly placed in an open crucible and heated in a muffle furnace from room temperature to 800°C at a heating rate of 5°C/min. The temperature was maintained at 800°C for 10 hours, followed by natural cooling, whereby the positive electrode active material was obtained.

Example 6

The synthesis methods of the first sodium manganese oxide and the second sodium manganese oxide in Example 6 were identical to those in Example 2. The differences are as follows:

Synthesis of positive electrode active material:

A total of 30 g of the first sodium manganese oxide and the second sodium manganese oxide, obtained as described above, was taken in a molar ratio of 0.5:99.5. The sample was pre-ground in an agate mortar and then milled in a planetary ball mill for 1 hour to obtain a precursor mixture. The precursor mixture was uniformly placed in an open crucible and heated in a muffle furnace from room temperature to 800°C at a heating rate of 5°C/min. The temperature was maintained at 800°C for 10 hours, followed by natural cooling, whereby the positive electrode active material was obtained.

Comparative Example 1

The synthesis methods of the first sodium manganese oxide and the second sodium manganese oxide in Comparative Example 1 were identical to those in Example 1. The differences are as follows:

Synthesis of positive electrode active material:

A total of 30 g of the first sodium manganese oxide and the second sodium manganese oxide, obtained as described above, was taken in a molar ratio of 1:3. The sample was pre-ground in an agate mortar and then milled in a planetary ball mill for 1 hour to obtain a precursor mixture. The precursor mixture was uniformly placed in an open crucible and heated in a muffle furnace from room temperature to 300°C at a heating rate of 5°C/min. The temperature was maintained at 300°C for 10 hours, followed by natural cooling, whereby the positive electrode active material was obtained.

Comparative Example 2

The synthesis methods of the first sodium manganese oxide and the second sodium manganese oxide in Comparative Example 2 were identical to those in Example 1. The differences are as follows:

Synthesis of positive electrode active material:

A total of 30 g of the first sodium manganese oxide and the second sodium manganese oxide, obtained as described above, was taken in a molar ratio of 1:3. The sample was pre-ground in an agate mortar and then milled in a planetary ball mill for 1 hour to obtain a precursor mixture. The precursor mixture was uniformly placed in an open crucible and heated in a muffle furnace from room temperature to 1000°C at a heating rate of 5°C/min. The temperature was maintained at 1000°C for 10 hours, followed by natural cooling, whereby the positive electrode active material was obtained.

Comparative Example 3

In Comparative Example 3, only the first sodium manganese oxide from Example 1 was included.

Comparative Example 4

In Comparative Example 4, only the second sodium manganese oxide from Example 1 was included.

[Tests]

1. Characterization of positive electrode active material

(1) Test for interlayer spacing and peak intensity

The sample to be tested was ground finely in an agate mortar in a glovebox and passed through a 350-mesh sieve. An appropriate amount of the sieved sample was placed in the groove of a sample holder, ensuring the loose sample powder slightly exceeded the sample holder plane. The sample surface was lightly pressed with a glass slide to level it flush with the holder plane, and excess powder was scraped off. After sample preparation, testing was conducted using a Bruker D8A_A25 X-ray powder diffractometer from Bruker AxS, Germany, with $CuK_\alpha$ radiation, a wavelength $\lambda=1.5406$ Å, scanning a $2\theta$ angle range of 5°-60° at a scanning rate of 4°/min.

For the P2 phase, the interlayer spacing $d_{002}$ of the 002 crystal plane was calculated based on the angle corresponding to the 002 crystal plane, generally with a $2\theta$ peak position within 15°-17°, using the equation $2d_{002}\sin\theta=\lambda$; the diffraction peak intensity $S_1$ corresponding to the 002 crystal plane within the 15°-17° range was obtained through full-spectrum fitting with Rietveld refinement.

For the O3 phase, the interlayer spacing $d_{003}$ of the 003 crystal plane was calculated based on the angle corresponding to the 003 crystal plane, generally with a $2\theta$ peak position within 15°-17°, using the equation $2d_{003}\sin\theta=\lambda$; the diffraction peak intensity $S_2$ corresponding to the 003 crystal plane within the 15°-17° range was obtained through full-spectrum fitting with Rietveld refinement.

(2) pH test

A 2 g sample of the positive electrode active material was placed in a beaker, 18 mL of deionized water was added, and the mixture was stirred at 25°C until completely dissolved. After standing for 30 minutes, the pH of the supernatant was measured using a pH meter.

(3) Test for elemental composition

The sample was tested according to the standard EPA6010D-2014 "Inductively Coupled Plasma Atomic Emission Spectroscopy. " The sample was digested into a solution through chemical methods, atomized into a plasma to excite characteristic spectral lines of the elements, and the elemental content was qualitatively and quantitatively analyzed based on the wavelength and intensity (proportional to concentration) of the spectral lines.

2. Performance test

(1) Discharge specific capacity test and capacity retention rate test after 50 cycles

At 25°C, the positive electrode active material was prepared into a coin cell, charged at a constant current density of 10 mA/g to 4.3 V, and then discharged at a constant current density of 10 mA/g to 2.0 V, whereby the discharge specific capacity $C_0$ of the coin cell was obtained. Subsequently, 50 charge-discharge cycles were performed at a constant current density of 10 mA/g, and the discharge specific capacity $C_1$ of the 50th cycle was taken. The capacity retention rate of the sodium manganese oxide positive electrode active material after 50 cycles was calculated as $(C_1/C_0) \times 100\%$.

The coin cell was prepared according to the following steps:

Preparation of positive electrode plate: The positive electrode active material, conductive agent carbon black (Super P), and binder polyvinylidene fluoride (PVDF) were mixed in a mass ratio of 80:15:5, added to N-methylpyrrolidone (NMP), and stirred uniformly to form a positive electrode slurry. The positive electrode slurry was uniformly applied onto the surface of an aluminum foil positive electrode current collector, dried, cold-pressed, and punched into a 14 mm diameter disc, whereby the positive electrode plate was obtained.

Negative electrode plate: a metallic sodium disc was used.

Preparation of the electrolyte: ethylene carbonate (EC) and diethyl carbonate (DEC) were mixed in equal volumes to obtain an organic solvent, and $NaClO_4$ was dissolved in the organic solvent to prepare an electrolyte with a concentration of 1 mol/L.

Separator: a porous polyethylene film was used as the separator.

Preparation of coin cell: The positive electrode plate, separator, and negative electrode plate were stacked in order, with the separator placed between the positive electrode plate and the negative electrode plate. The prepared electrolyte was added, whereby the preparation of the coin cell was completed.

The characterization results of the positive electrode active material are shown in Table 1:

**Table 1**

| Example | Average chemical composition of positive electrode active material | Interlayer spacing $d_1$ (nm) | Interlayer spacing $d_2$ (nm) | $d_1 - d_2$ (nm) | S1/(S1+S2) |
|---|---|---|---|---|---|
| Example 1 | $Na_{0.84}Mn_{0.50}Fe_{0.23}Ni_{0.2}Cu_{0.07}O_2$ | 0.554 | 0.541 | 0.013 | 24% |
| Example 2 | $Na_{0.85}Mn_{0.44}Fe_{0.27}Ni_{0.2}Ti_{0.09}O_2$ | 0.551 | 0.539 | 0.018 | 10% |
| Example 3 | $Na_{0.88}Mn_{0.50}Fe_{0.23}Ni_{0.2}Zn_{0.07}O_2$ | 0.552 | 0.538 | 0.014 | 23% |
| Example 4 | $Na_{0.86}Mn_{0.48}Fe_{0.24}Ni_{0.2}Ti_{0.08}O_2$ | 0.551 | 0.537 | 0.016 | 21% |
| Comparative Example 1 | $Na_{0.83}Mn_{0.50}Fe_{0.23}Ni_{0.2}Cu_{0.07}O_2$ | 0.558 | 0.537 | 0.021 | 24% |
| Comparative Example 2 | $Na_{0.79}Mn_{0.50}Fe_{0.23}Ni_{0.2}Cu_{0.07}O_2$ | 0.548 | 0.539 | 0.009 | 25% |
| Comparative Example 3 | $Na_{0.69}Mn_{0.8}Ni_{0.2}O_2$ | 0.553 | / | / | / |
| Comparative Example 4 | $Na_{0.91}Mn_{0.4}Fe_{0.3}Ni_{0.2}Cu_{0.1}O_2$ | / | 0.537 | / | / |
| Example 5 | $NaMn_{0.7}Fe_{0.08}Ni_{0.2}Cu_{0.02}O_2$ | 0.552 | 0.537 | 0.015 | 75% |
| Example 6 | $Na_{0.9}Mn_{0.4}Fe_{0.3}Ni_{0.2}Cu_{0.1}O_2$ | 0.553 | 0.536 | 0.017 | 0.5% |

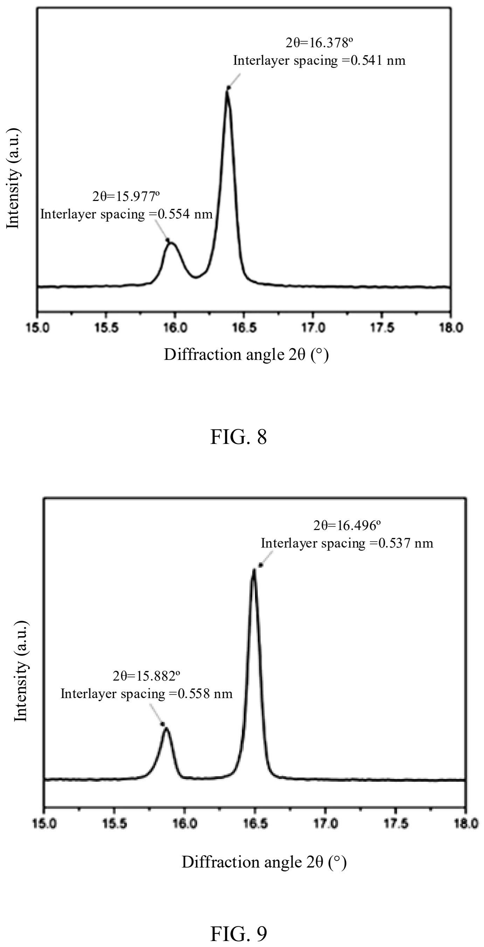

The XRD diffraction spectra of the positive electrode active materials in Example 1 and Comparative Example 1 are shown in FIG. 8 and FIG. 9, respectively.

The characterization results of the coin cells are shown in Table 2:

Table 2

| Example | 2.0 V-4.3 V discharge specific capacity $C_0$ (mAh/g) | Capacity retention rate after 50 cycles (%) |
|---|---|---|
| Example 1 | 139 | 91 |
| Example 2 | 142 | 89 |
| Example 3 | 135 | 88 |
| Example 4 | 132 | 91 |
| Comparative Example 1 | 117 | 76 |
| Comparative Example 2 | 116 | 75 |
| Comparative Example 3 | 107 | 75 |
| Comparative Example 4 | 109 | 78 |
| Example 5 | 121 | 81 |
| Example 6 | 126 | 85 |

In the description of this specification, references to terms such as "one embodiment " or "another embodiment " mean that the specific features, structures, materials, or characteristics described in connection with the embodiment are included in at least one embodiment of the present application. In this specification, schematic expressions of the above terms do not necessarily refer to the same embodiment or example. Moreover, the specific features, structures, materials, or characteristics described may be combined in any suitable manner in any one or more embodiments or examples. Additionally, without contradicting each other, those skilled in the art may combine and integrate different embodiments or examples described in this specification, as well as the features of different embodiments or examples.

In the description of this specification, the terms "first " and "second " are used for descriptive purposes only and are not to be construed as indicating or implying relative importance or implicitly indicating the number of technical features indicated. Although embodiments of the present application have been shown and described above, it should be understood that the above embodiments are exemplary and not to be construed as limiting the present application. Those skilled in the art may make changes, modifications, substitutions, and variations to the above embodiments within the scope of the present application.

**Claims**

1. A positive electrode active material, comprising a sodium manganese oxide, wherein

the sodium manganese oxide comprises a first phase and a second phase, the first phase comprising alternating first sodium ion layers and first transition metal layers, and the second phase comprising alternating second sodium ion layers and second transition metal layers; and
in the first phase, an interlayer spacing between adjacent first transition metal layers in a direction perpendicular to a (001) crystal plane is $d_1$, in the second phase, an interlayer spacing between adjacent second transition metal layers in the direction perpendicular to the (001) crystal plane is $d_2$, and $d_1$-$d_2$ ranges from 0.01 nm to 0.02 nm.

2. The positive electrode active material according to claim 1, wherein the sodium manganese oxide comprises a doping element Q, the doping element satisfying at least one of the following conditions:

the doping element Q comprises a first doping element Q1, the first doping element partially substituting sodium in the sodium manganese oxide, and the first doping element comprising at least one of Li, K, Ca, La, and Sr;
the doping element Q comprises a second doping element Q2, the second doping element partially substituting manganese in the sodium manganese oxide, and the second doping element comprising at least one of Fe, Co, Ni, Cu, Zn, Ga, Li, B, Mg, Al, Si, Ti, Y, Zr, Nb, Mo, In, Sn, Sb, La, Ce, Ta, W, and Bi; and
the doping element Q comprises a third doping element Q3, the third doping element partially substituting oxygen in the sodium manganese oxide, and the third doping element comprising at least one of F and Cl.

3. The positive electrode active material according to claim 1 or 2, wherein the sodium manganese oxide satisfies a chemical formula: $Na_xQ1_aMn_yQ2_bO_zQ3_c$, wherein

$$0.5 < x \leq 1.2, \ 0 \leq a \leq 0.5,$$

and $0.5 < x+a \leq 1.2$;

$$0 < y, \ 0 \leq b \leq 0.6,$$

and $y+b=1$; and

$$1.8 \leq z \leq 2.2, \ 0 \leq c \leq 0.2,$$

and $1.8 \leq z+c \leq 2.2$.

4. The positive electrode active material according to claim 3, wherein the sodium manganese oxide satisfies a chemical formula: $Na_xQ1_aMn_yFe_dNi_eQ2_bO_zQ3_c$, wherein

   $y+d+e+b=1$, $0.1 \leq d \leq 0.6$, and $0.1 \leq e \leq 0.6$; and
   in the first phase, a diffraction peak intensity of the first transition metal layer/the first sodium ion layer for X-rays within $2\theta$ ranges from 13° to 16.2° is $S_1$, and in the second phase, a diffraction peak intensity of the second transition metal layer/the second sodium ion layer for X-rays within 20 ranges from 16.2° to 17° is $S_2$, wherein $S_1/(S_2+S_1) \times e \leq 0.1$.

5. The positive electrode active material according to claim 4, wherein $0.05 \leq S_1/(S_2+S_1)$.

6. The positive electrode active material according to any one of claims 1-5, wherein

   the first phase of the sodium manganese oxide satisfies a chemical formula: $Na_{x1}Q1_{a1}Mn_{y1}Fe_{d1\text{-}}Ni_{e1}Q2_{b1}O_zQ3_{c1}$, wherein
   $0.6 < x1 \leq 0.8$, $0 \leq a1 \leq 0.6$, $0 \leq b1 \leq 0.6$, $y1+d1+e1+c1=1$, and $0 \leq (d1 \times e1)/(y1^2) \leq 0.5$; and
   the second phase of the sodium manganese oxide satisfies a chemical formula: $Na_{x2}Q1_{a2}Mn_{y2}Fe_{d2\text{-}}Ni_{e2}Q2_{b2}O_zQ3_{c2}$, wherein
   $0.7 < x2 \leq 1$, $0.1 \leq a2 \leq 0.6$, $0.1 \leq b2 \leq 0.6$, $y2+d2+e2+c2=1$, and $0.1 \leq (d2 \times e2)/(y2^2) \leq 1$.

7. The positive electrode active material according to claim 6, wherein in the first phase, the diffraction peak intensity of the first transition metal layer/the first sodium ion layer for X-rays within $2\theta$ ranges from 13° to 16.2° is $S_1$, in the second phase, the diffraction peak intensity of the second transition metal layer/the second sodium ion layer for X-rays within 20 ranges from 16.2° to 17° is $S_2$, and $S_1$ and $S_2$ satisfy $0.01 \leq S_1/(S_1+S_2) \leq 0.5$.

8. The positive electrode active material according to any one of claims 1-7, wherein 0.550 nm $\leq d_1 \leq$ 0.565 nm, and 0.530 nm $\leq d_2 \leq$ 0.545 nm.

9. The positive electrode active material according to any one of claims 1-8, wherein the first phase is a P2 phase with a space group of P63/mmc; and the second phase is an O3 phase with a space group of R3m.

10. The positive electrode active material according to any one of claims 1-9, wherein at 25°C, a pH of a deionized water solution of the positive electrode active material with a mass concentration of 2 g/18 mL is 7-13.

11. A method for preparing the positive electrode active material according to any one of claims 1-10, comprising:

    providing a precursor;
    performing a calcination treatment on the precursor to obtain the positive electrode active material, wherein the positive electrode active material comprises a sodium manganese oxide; and

the sodium manganese oxide comprises a first phase and a second phase, the first phase comprising alternating first sodium ion layers and first transition metal layers; the second phase comprising alternating second sodium ion layers and second transition metal layers; and in the first phase, an interlayer spacing between adjacent first transition metal layers in a direction perpendicular to a (001) crystal plane is $d_1$, in the second phase, an interlayer spacing between adjacent second transition metal layers in the direction perpendicular to the (001) crystal plane is $d_2$, and $d_1$-$d_2$ ranges from 0.01 nm to 0.02 nm.

12. The method according to claim 11, wherein

the providing a precursor comprises: providing a mixture of a first sodium manganese oxide and a second sodium manganese oxide, wherein a molar amount of the first sodium manganese oxide in the mixture is $m_1$, a molar amount of the second sodium manganese oxide in the mixture is $m_2$, and $m_1$:$m_2$ ranges from (1:2) to (1:10), wherein an interlayer spacing between adjacent first transition metal layers in the first sodium manganese oxide in the direction perpendicular to the (001) crystal plane is 0.550 nm-0.565 nm, and an interlayer spacing between adjacent second transition metal layers in the second sodium manganese oxide in the direction perpendicular to the (001) crystal plane is 0.530 nm-0.545 nm.

13. The method according to claim 11 or 12, wherein the calcination treatment satisfies at least one of the following conditions:

a temperature of the calcination treatment is 800°C-900°C; and
a duration of the calcination treatment is 0.5 h-20 h.

14. The method according to claim 12, wherein
providing the first sodium manganese oxide comprises: providing a mixture of a sodium source, a manganese oxide, and a doping element oxide, and performing a first calcination treatment, wherein a molar amount of the sodium source in the mixture is $m_{1-1}$, a molar amount of the manganese oxide in the mixture is $m_{2-1}$, a molar amount of the doping element oxide in the mixture is $m_{3-1}$, and $m_{1-1}$:$m_{2-1}$:$m_{3-1}$=(0.5-0.8):(0.6-0.95):(0-0.4).

15. The method according to claim 14, wherein the first calcination treatment satisfies at least one of the following conditions:

a temperature of the first calcination treatment is 700°C-900°C; and
a duration of the first calcination treatment is 10 h-20 h.

16. The method according to claim 12, wherein
providing the second sodium manganese oxide comprises: providing a mixture of a sodium source, a manganese oxide, and a doping element oxide, and performing a second calcination treatment, wherein a molar amount of the sodium source in the mixture is $m_{1-2}$, a molar amount of the manganese oxide in the mixture is $m_{2-2}$, a molar amount of the doping element oxide in the mixture is $m_{3-2}$, and $m_{1-2}$:$m_{2-2}$:$m_{3-2}$=(0.8-1.1):(0.3-0.5):(0-0.6).

17. The method according to claim 16, wherein the second calcination treatment satisfies at least one of the following conditions:

a temperature of the second calcination treatment is 800°C-1100°C; and
a duration of the second calcination treatment is 10 h-20 h.

18. A positive electrode plate, comprising the positive electrode active material according to any one of claims 1-10, and/or a positive electrode active material prepared using the method according to any one of claims 11-17.

19. A battery, comprising the positive electrode plate according to claim 18.

20. An electric apparatus, comprising the battery according to claim 19.

FIG. 1

FIG. 2

FIG. 3

FIG. 4

FIG. 5

FIG. 6

FIG. 7

2θ=16.378º
Interlayer spacing =0.541 nm

2θ=15.977º
Interlayer spacing =0.554 nm

Intensity (a.u.)

Diffraction angle 2θ (°)

FIG. 8

2θ=16.496º
Interlayer spacing =0.537 nm

2θ=15.882º
Interlayer spacing =0.558 nm

Intensity (a.u.)

Diffraction angle 2θ (°)

FIG. 9

## INTERNATIONAL SEARCH REPORT

| International application No. |
| --- |
| **PCT/CN2023/127831** |

| A. | CLASSIFICATION OF SUBJECT MATTER |
| --- | --- |

H01M 4/36(2006.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, WPABS, CNKI: 钠, 锰, 第二相, 两相, 层间距, Sodium, Manganese, second phase, two phases, interlayer spacing

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116565183 A (CONTEMPORARY AMPEREX TECHNOLOGY CO., LTD.) 08 August 2023 (2023-08-08)<br>claims 1-20 | 1-20 |
| A | CN 116247193 A (DUOZHU TECHNOLOGY (WUHAN) CO., LTD.) 09 June 2023 (2023-06-09)<br>description, paragraph 39 | 1-20 |
| A | CN 115057485 A (UNIVERSITY OF SCIENCE AND TECHNOLOGY OF CHINA) 16 September 2022 (2022-09-16)<br>entire document | 1-20 |
| A | CN 116130644 A (NANTONG MAOLUE TECHNOLOGY CO., LTD.) 16 May 2023 (2023-05-16)<br>entire document | 1-20 |
| A | CN 116199275 A (NINGBO RONBAY NEW ENERGY TECHNOLOGY CO., LTD.) 02 June 2023 (2023-06-02)<br>entire document | 1-20 |

☑ Further documents are listed in the continuation of Box C.     ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **21 February 2024** | **26 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/127831**

**C.** **DOCUMENTS CONSIDERED TO BE RELEVANT**

| Category* | Citation of document, with indication, where appropriate, of the relevant passages | Relevant to claim No. |
|---|---|---|
| A | KR 20220048912 A (IUCF HYU) 20 April 2022 (2022-04-20)<br>entire document | 1-20 |
| A | WO 2013129831 A1 (SK INNOVATION CO., LTD. et al.) 06 September 2013 (2013-09-06)<br>entire document | 1-20 |

Form PCT/ISA/210 (second sheet) (July 2022)

**INTERNATIONAL SEARCH REPORT**
Information on patent family members

International application No.

**PCT/CN2023/127831**

| Patent document cited in search report | | | Publication date (day/month/year) | Patent family member(s) | | | Publication date (day/month/year) |
|---|---|---|---|---|---|---|---|
| CN | 116565183 | A | 08 August 2023 | None | | | |
| CN | 116247193 | A | 09 June 2023 | None | | | |
| CN | 115057485 | A | 16 September 2022 | None | | | |
| CN | 116130644 | A | 16 May 2023 | None | | | |
| CN | 116199275 | A | 02 June 2023 | None | | | |
| KR | 20220048912 | A | 20 April 2022 | None | | | |
| WO | 2013129831 | A1 | 06 September 2013 | KR | 20130098224 | A | 04 September 2013 |
| | | | | KR | 102058460 | B1 | 23 December 2019 |

Form PCT/ISA/210 (patent family annex) (July 2022)